# FASCICULE DE BREVET EUROPEEN

(11) **EP 0 466 529 B1**
(45) Date de publication et mention de la délivrance du brevet: **09.03.1994**
(21) Numéro de dépôt: 91401569.8
(22) Date de dépôt: 13.06.1991
(51) Int. Cl.: B60J 7/057

(54) **Cadre modulaire pour toits coulissants et/ou entrebâillants guidés par câbles**
Durch Kabel geführtes Hebe-Schiebedach mit zusammensetzbarem Rahmen
Modular frame for cable-guided tilting and/or sliding roofs

(30) Priorité: 09.07.1990 FR 9008685
(43) Date de publication de la demande: 15.01.1992
(73) Titulaire: WEBASTO HEULIEZ : Société à Responsabilité Limitée, F-85700 Les Châtelliers -Châteaumur (FR)
(72) Inventeur: Cheron, Christian, F-49000 Angers (FR); de Gaillard, François, F-85390 Mouilleron en Pareds (FR)
(74) Mandataire: Rodhain, Claude

(56) Documents cités:
- DE-A- 2 836 801
- DE-A- 3 532 103
- DE-B- 1 117 421

## Description

L'invention concerne un cadre modulaire pour toits coulissants et/ou entrebâillants guidés par câbles, notamment pour toits coulissants et/ou entrebâillants de véhicule, constitué de deux pièces de guidage latérales alignées parallèlement l'une à l'autre pour guider en coulissement dans des canaux latéraux de guidage des chariots d'articulation du toit coulissant manoeuvrés par câbles, un premier élément transversal avant présentant des zones latérales d'extrémité se raccordant auxdites pièces de guidage latérales, un second élément transversal faisant pontage entre les pièces de guidage latérales sensiblement dans leur partie centrale et des moyens de guidage des câbles pour leur guidage rigide en compression.

Dans une telle construction connue de toit coulissant, telle que celle divulguée dans le document FR-A-2 527 995, le cadre est constitué d'une seule pièce, chaque élément de construction du cadre présentant une structure identique en forme et en section, le cadre étant obtenu par cintrage d'un profilé métallique. Il s'avère cependant que le cintrage du profilé est une opération délicate et coûteuse du fait qu'il est extrêmement difficile de conserver une section constante du profilé dans les zones de courbure. Par ailleurs, ce type de cadre n'est pas modulaire du fait que la partie avant (élément transversal avant) est dépendante des pièces latérales. Enfin, la pose des équipements de manoeuvre des câbles nécessite l'usinage du profilé tandis que l'intégration d'accessoires dans le volume intérieur du cadre, tel qu'un réflecteur de vent, implique souvent un surdimensionnement inutile du profilé dans certaines zones du cadre.

On connait aussi des cadres venus par moulage tels que divulgués dans US-A-3 964 784. Dans ce cas il est nécessaire de rapporter des pièces de guidage latérales en plus du cadre ou de prévoir des pièces de fermeture des chemins de coulissement sur les pièces de guidage latérales venues de moulage. En outre, la forme du cadre est liée au démoulage et il subsiste toujours de la matière inutile dans certaines zones du cadre ce qui grève d'autant les coûts de production de ce type de cadres. Par ailleurs, dans ce type de cadre il apparaît des points de butée des câbles notamment entre les pièces de guidage latérales et les zones de raccordement sur le cadre, ce qui produit des bruits et des difficultés lors du coulissement des câbles guidés à travers les différentes pièces dans le but de manoeuvrer le toit coulissant.

L'invention a pour objet un cadre modulaire constitué d'éléments d'assemblage s'emboîtant entre eux pour être posés sur le véhicule, le cadre assurant à la fois le support des mécanismes d'articulation du toit coulissant et/ou entrebâillant, la fixation des organes de commande de câbles et la collecte et l'évacuation de l'eau susceptible de ruisseler dans ces différentes pièces.

Un autre objectif de l'invention est de proposer un cadre modulaire dont les pièces principales de guidage latérales peuvent être reconduites telles que indépendamment de la forme du cadre désirée pour différents types de cadres.

Un autre objectif de l'invention est de réduire au minimum le coût de production et le poids du cadre en évitant de laisser des zones de matière inutile.

Un autre objectif de 'invention est de rendre indépendant l'élément transversal avant des moyens de guidage des câbles.

Un autre objectif de l'invention est de proposer un cadre modulaire comportant un minimum d'éléments d'assemblage.

Ces objectifs sont atteints à l'aide d'un cadre modulaire pour toits coulissants et/ou entrebâillants guidés par câbles, notamment pour toits coulissants et/ou entrebâillants de véhicule, constitué de deux pièces de guidage latérales alignées parallèlement l'une à l'autre pour guider en coulissement dans des canaux latéraux de guidage des chariots d'articulation du toit manoeuvrés par câbles, un premier élément transversal avant présentant des zones latérales d'extrémité se raccordant auxdites pièces de guidage latérales, un second élément transversal faisant pontage entre les pièces de guidage latérales sensiblement dans leur partie centrale et des moyens de guidage des câbles pour leur guidage rigide en compression, caractérisé en ce que ledit premier élément transversal avant est conformé pour définir un volume intérieur ouvert en forme de gouttière, les zones latérales d'extrémité présentant en section une forme intérieure sensiblement identique et complémentaire de la forme extérieure d'une pièce de guidage latérale, lesdites zones latérales d'extrémité se raccordant auxdites pièces de guidage latérales par insertion des extrémités avant des pièces de guidage latérales à l'intérieur des zones latérales d'extrémité et en ce que lesdits moyens de guidage de câbles sont constitués de seconds canaux latéraux de guidage, juxtaposés aux premiers canaux de guidage des chariots dans lesdites pièces de guidage latérales et de gaines de guidage dans lesquelles coulissent les câbles, chaque gaine de guidage étant maintenue dans le volume intérieur du premier élément transversal avant en prolongement axial d'un second canal de guidage de câble correspondant par des moyens de fixation de gaine.

En partant du modèle de cadre selon l'invention, les pièces de guidage latérales équipées des mécanismes d'articulation du toit pour son coulissement et/ou son entrebâillement peuvent être assemblées avec différents types d'éléments transversaux avant présentant des zones latérales d'extrémité adaptées à leur profil. Ces pièces de guidage latérales sont avantageusement constituées dans un profilé d'aluminium extrudé. L'élément transversal avant peut être venu par moulage d'une matière synthétique thermoplastique ou thermodurcissable ou par emboutissage d'une tôle métallique. Sa conformation ne présente aucune difficulté et on peut prévoir avantageusement que cette pièce ne comporte pas de matière inutile ce qui réduit d'autant son coût de fabrication. Pour adapter le cadre à des dimensions différentes du toit coulissant il suffit de régler l'écartement des pièces de guidage latérales en prolongeant plus ou moins la partie centrale des deux éléments transversaux. Les gaines de guidage de câble et les moyens de fixation de gaine assurent l'indépendance du premier élément transversal avant avec les canaux de guidage de câble dans les pièces de guidage latérales. Outre le fait que le cadre selon l'invention est modulaire il peut être directement monté sur le véhicule après assemblage des différents éléments qui le constituent. Les moyens de fixation de gaine permettent de positionner les orifices des gaines dans le prolongement axial des canaux de guidage des câbles ce qui évite les bruits et les difficultés lors du coulissement des câbles.

Selon encore une autre caractéristique de l'invention les gaines de guidage de câble comportent un orifice évasé à leur extrémité prolongeant un canal de guidage de câble. De cette manière, on élimine complètement les risques de bruit ou d'accrochage du câble entre le canal de guidage de câble et la gaine.

Selon encore une autre caractéristique de l'invention, ledit premier élément transversal avant comporte en disposition symétrique par rapport à son axe transversal deux orifices d'évacuation d'eau vers l'extérieur de son volume intérieur dans les zones latérales d'extrémité, lesdites zones latérales d'extrémité présentant dans leur volume intérieur des zones de niveau bas au voisinage des orifices d'évacuation d'eau et des zones de niveau haut au voisinage de la zone de raccordement avec une pièce de guidage latérale. Ainsi l'eau ruisselant dans les pièces de guidage latérales est canalisée par gravité dans des zones latérales d'extrémité du premier élément transversal avant et évacuée par les orifices d'évacuation d'eau. On pourra avantageusement prévoir que les orifices d'évacuation d'eau soient prolongés vers l'extérieur du volume intérieur du premier élément transversal avant par un tube venu de moulage ou brasé pour recevoir un tuyau d'évacuation d'eau vers l'extérieur du véhicule.

Selon encore une autre caractéristique de l'invention, ledit premier élément transversal avant présente en outre dans son volume intérieur une zone de niveau haut au voisinage de son axe transversal formant une pente sensiblement régulière en direction desdites zones de niveau bas dans les zones latérales d'extrémité. L'eau récupérée dans le premier élément transversal avant peut ainsi s'écouler par gravité vers les orifices d'évacuation d'eau.

Selon encore une autre caractéristique de l'invention, ledit premier élément transversal avant comporte un renfoncement de sa surface inférieure au voisinage de son axe transversal, ledit renfoncement étant conformé pour loger et fixer des moyens de commande des câbles. De cette manière on évite l'ajourage réalisé par usinage ou autres moyens similaires de l'élément transversal avant pour le passage notamment d'une roue dentée d'entraînement des câbles comme c'est le cas dans les cadres fabriqués à partir du cintrage d'un profilé, tout en s'affranchissant des problèmes d'étanchéité dus à l'ajourage. La roue d'entraînement de câble et le moteur de commande de la roue dentée sont avantageusement fixés sur des plots prévus sur la surface extérieure du renfoncement, par des vis auto-taraudeuses ou analogues. Les gaines de câble flexibles sont amenées et fixées en position de part et d'autre de la roue dentée et comportent un évidement pour assurer le contact étroit entre la roue dentée et les câbles, la rotation de la roue dentée entraînant en coulissement les câbles dans les gaines.

Selon encore une autre caractéristique de l'invention, le premier élément transversal avant comporte deux gorges dans les zones latérales d'extrémité pour le passage desdites gaines de guidage de câble. Les gorges constituent un second point de fixation des gaines et permettent de tirer les extrémités non actives des gaines vers l'extérieur du premier élément transversal avant.

Selon encore une autre caractéristique de l'invention, chaque moyen de fixation de gaine comprend un pavé venu de forme dans le volume intérieur du premier élément transversal avant et présentant sur sa surface supérieure un évidemment longitudinal comportant une gorge transversale audit évidement. Par ailleurs chaque gaine comporte à son extrémité un bourrelet sur sa circonférence venant se loger dans ladite gorge dans l'évidement. Une pièce d'étanchéité fixée audit pavé par clipage ou analogue vient couvrir l'extrémité de la gaine dans l'évidement.

Selon encore une autre caractéristique de l'invention le volume intérieur du premier élément transversal avant est prévu pour loger complètement un déflecteur de vent. D'autres accessoires peuvent facilement se loger dans le volume intérieur du premier élément transversal avant du fait que son volume intérieur n'est encombré par aucun mécanisme d'articulation du toit coulissant.

Selon encore une autre caractéristique de l'invention, lesdites pièces de guidage latérales présentent une section transversale essentiellement en forme de U prolongée par un premier flasque longitudinal faisant saillie vers l'extérieur du cadre et ledit premier élément transversal avant comporte un flasque longitudinal faisant saillie vers l'extérieur du cadre et prolongeant sensiblement lesdits flasques longitudinaux desdites pièces de guidage latérales pour la fixation du cadre sur le pavillon du véhicule.

Selon encore une autre caractéristique de l'invention, lesdits flasques longitudinaux faisant saillie vers l'extérieur du cadre et les pièces de guidage latérales dudit premier élément transversal sont incurvés dans leur direction longitudinale respective pour épouser la forme du pavillon du véhicule.

Selon encore une autre caractéristique de l'invention, lesdites pièces de guidage latérales comportent des seconds flasques longitudinaux faisant saillie vers l'intérieur du cadre, le premier élément transversal avant présente un second flasque longitudinal faisant saillie vers l'intérieur du cadre et le second élément transversal comporte un flasque longitudinal faisant saillie vers l'intérieur du cadre pour recevoir une garniture intérieure du cadre.

Selon encore une autre caractéristique de l'invention les pièces de guidage latérales sont fixées sur les extrémités du second élément transversal par des pattes de fixation maintenues rigidement sur la surface supérieure du second élément transversal et venant en appui sur la surface supérieure des flasques latéraux faisant saillie vers l'intérieur du cadre des pièces de guidage latérales et par des points de fixation reliant les flasques latéraux faisant saillie vers l'extérieur du cadre des pièces de guidage latérales et des flasques d'extrémités du second élément transversal. De cette manière on obtient une fixation en trois points, les points de fixation étant suffisamment éloignés les uns des autres pour assurer une bonne rigidité du cadre. En particulier, il est primordial de limiter toute torsion des pièces latérales de guidage.

Selon encore une autre caractéristique de l'invention les flasques d'extrémité du second élément transversal sont prolongées par une patte de fixation sur le véhicule de manière à pouvoir chercher un point de fixation sur le pavillon éloigné de l'ouverture de toit.

Selon encore une autre caractéristique de l'invention, le cadre comporte en outre un troisième élément transversal arrière présentant deux zones latérales d'extrémité se raccordant auxdites pièces de guidage latérales, ledit troisième élément transversal arrière comportant une paroi verticale dans laquelle, sont aménagées des ouvertures en prolongement desdits premiers canaux de guidage des chariots desdites pièces de guidage latérales.

Selon encore une autre caractéristique de l'invention et dans le cas où le cadre modulaire ne comporte pas de troisième élément transversal arrière, on prévoit une pièce de fermeture venant se loger dans l'extrémité libre des pièces de guidage latérales pour la canalisation et l'évacuation d'eau.

L'invention apparaîtra encore mieux à la lecture de la description qui va suivre donnée à titre d'exemple non limitatif et des figures annexées dans lesquelles
- la figure 1 représente une vue éclatée en perspective du cadre selon l'invention,
- la figure 2 représente de façon schématique la section d'une pièce de guidage latérale selon la coupe II-II dans la figure 1,
- la figure 3 représente de façon schématique, la section d'une pièce de guidage latérale à l'extrémité arrière de celle-ci.

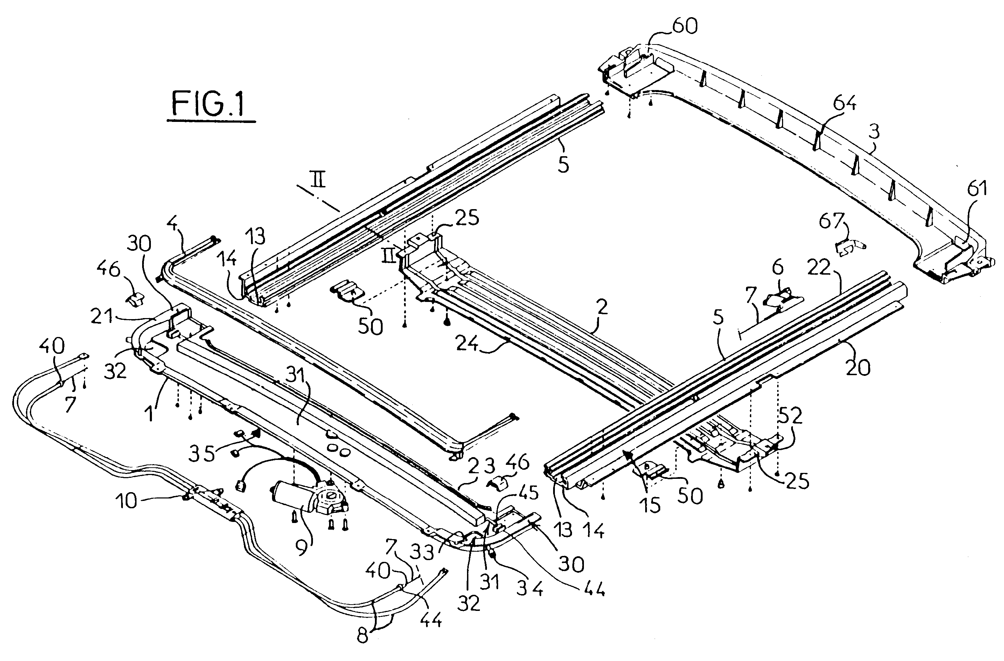

En se reportant à la figure 1, le cadre selon l'invention est constitué d'éléments d'assemblage comprenant principalement deux pièces de guidage latérales 5, d'une traverse avant 1 et d'une traverse centrale 2. Ces quatre éléments d'assemblage sont emboîtés et fixés entre eux, comme cela sera décrit ci-après, pour former une structure de cadre rigide susceptible d'être posée sous une ouverture aménagée dans la surface du pavillon du véhicule. Traditionnellement les pièces de guidage latérales reçoivent des mécanismes d'articulation d'un panneau mobile entrebâillant et/ou coulissant sur ou sous la surface du pavillon du véhicule. Ces mécanismes d'articulation comprennent des chariots de guidage se déplaçant en translation dans les pièces de guidage latérales de façon à communiquer par un jeu de coulisses un mouvement vertical ou horizontal à un panneau mobile venant fermer partiellement ou complètement l'ouverture du pavillon. Chaque pièce de guidage latérale 5 comporte un premier canal latéral de guidage 13 pour guider en coulissement un chariot de guidage 6 du toit coulissant, ce chariot de guidage étant manoeuvré par un câble 7 guidé rigidement en compression dans un second canal de guidage de câble 14 juxtaposé au premier canal de guidage 13 du chariot.

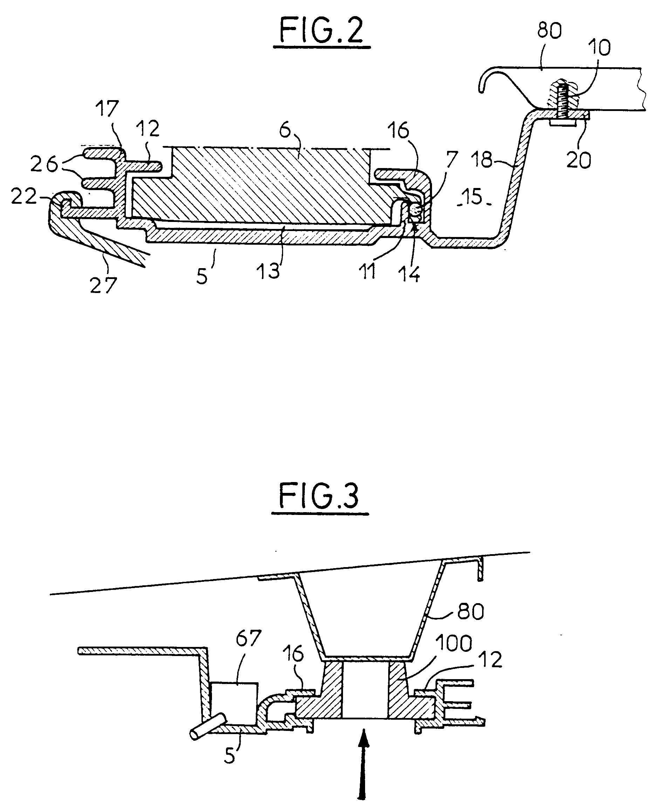

On prévoit avantageusement dans le profilé de chaque pièce de guidage latérale 5 un troisième canal 15 pour l'évacuation de l'eau comme cela est décrit dans le document FR 2 527 995 cité en référence. Les pièces de guidage latérales ont essentiellement une section en forme de U dans laquelle les différents canaux se juxtaposent comme cela sera décrit plus en détail en référence la figure 2.

Les deux pièces de guidage latérales 5 sont alignées parallèlement l'une à l'autre et sont raccordées à des zones latérales d'extrémité 30 de la traverse avant 1.

La traverse centrale 2 quant à elle fait pontage entre les deux pièces de guidage latérales 5 sensiblement dans leur partie centrale pour maintenir le parallélisme entre les deux pièces de guidage latérales et rigidifier l'ensemble du cadre.

La traverse avant 1 est conformée de préférence pour définir un volume intérieur ouvert en forme de gouttière. Cette conformation peut avantageusement être obtenue par moulage d'une matière synthétique thermoplastique ou thermodurcissable ou par emboutissage d'une tôle métallique. Les zones latérales d'extrémité 30 de la traverse avant 1 présentent en section une forme intérieure, sensiblement identique et complémentaire de la forme extérieure d'une pièce de guidage latérale 5. Ces zones latérales d'extrémité 30 se raccordent aux pièces de guidage latérales 5 par insertion des extrémités avant de ces pièces à l'intérieur des zones latérales d'extrémité. La fixation des pièces de guidage latérales avec la traverse avant est obtenue par collage ou analogue. Dans tous les cas, la zone de recouvrement des pièces de guidage latérales 5 dans les zones d'extrémité de la traverse avant 1 devra être suffisante pour permettre une bonne rigidité du cadre. on pourra aussi prévoir des cordons de colle avec des réservoirs de débordement intégrés dans la paroi de raccordement de la traverse avant pour rendre étanche le raccordement de ces éléments d'assemblage.

Par conséquent, hormis les zones latérales d'extrémité, la forme de la traverse avant 1 est indépendante du profilé des pièces de guidage latérales 5 de sorte que l'on pourra avantageusement conformer la traverse avant 1 au choix pour lui faire réaliser différentes fonctions et pour recevoir diverses pièces fonctionnelles comme cela sera décrit ci-après.

Des gaines 8 de guidage de câble sont fixées par une de leurs extrémités dans le volume intérieur de la traverse avant 1 en prolongement axial respectivement avec le second canal latéral de guidage 14 des pièces de guidage latérales 5 raccordées aux zones latérales d'extrémité 30. Chaque câble de guidage 7 relié par une extrémité à un chariot de guidage 6 coulisse en partie dans un canal de guidage latéral 14 et en partie dans une gaine 8 lors du mouvement en translation du chariot de guidage 6 dans son canal de guidage 13. Par conséquent les deux pièces de guidage latérales 5 sont indépendantes de la traverse avant 1, chacun de ces éléments d'assemblage possédant un moyen de guidage de câble différent mais complémentaire. Il est facile de comprendre que les pièces de guidage latérales incorporant éventuellement l'ensemble des mécanismes d'articulation du toit pourront être reconduites en l'état sur diverses traverses avant présentant des zones latérales d'extrémité adaptées de sorte que le cadre selon l'invention est modulaire. On comprendra que les pièces de guidage latérales pourront être fabriquées de façon standard pour équiper diverses formes de traverse avant ce qui permet de réduire le coût de fabrication des cadres.

Les gaines 8 présentent chacune à leur extrémité en prolongement axial avec un canal de guidage de câble 14 un orifice évasé 40 de façon que les spires du câble n'accrochent pas le bord de l'orifice de la gaine pendant son coulissement dans la gaine. La forme évasée de l'orifice de la gaine tout en améliorant le coulissement du câble dans celle-ci permet d'augmenter la tolérance relative dans le positionnement de la gaine par rapport au second canal de guidage du câble et faciliter ainsi le montage de la gaine. Chaque gaine 8 de guidage de câble comporte par ailleurs à son extrémité de raccordement avec un canal de guidage de câble un bourrelet 44 sur sa circonférence à proximité de l'orifice évasé 40 de la gaine. Cette extrémité de gaine est maintenue en position par un pavé 43 venu de forme dans le volume intérieur de la traverse avant 1 présentant sur sa surface supérieure un évidemment longitudinal 46 dans lequel est emboîté l'extrémité de la gaine 8. L'évidement longitudinal 46 comporte une gorge 45 transversale à celui-ci pour recevoir le bourrelet 44 de la gaine. L'extrémité de la gaine est ainsi encastrée dans le pavé 43 et immobilisée dans 2 directions. Une pièce d'étanchéité 46 recouvre la surface supérieure du pavé 43 et la surface apparante de l'extrémité de la gaine 8 tout en chevauchant en partie le canal de guidage de câble 14 pour rendre étanche le raccordement entre la gaine de guidage de câble et le canal de guidage de câble et immobiliser l'extrémité de la gaine dans la troisième dimension. Cette pièce d'étanchéité 46 est fixée au pavé 43 par clipage ou analogue. De cette manière ladite extrémité de gaine est maintenue rigidement et sans compression en prolongement axial avec le canal de guidage de câble.

La traverse avant 1 étant venue de forme, il est facile de conformer la paroi définissant le volume intérieur de la traverse avant, sans matière supplémentaire, pour l'équiper d'éléments fonctionnels. la traverse avant 1 comporte en disposition symétrique par rapport à son axe transversal deux orifices d'évacuation d'eau 34 pour évacuer l'eau depuis l'intérieur de la traverse avant 1 vers l'extérieur de celle-ci. Chaque orifice d'évacuation d'eau 34 est disposé dans une zone latérale d'extrémité 30, de préférence au niveau de l'angle de la zone latérale d'extrémité, pour la canalisation de l'eau vers l'extérieur du véhicule le long des éléments de carrosserie du véhicule.

Les zones latérales d'extrémité 30 présentent dans leur volume intérieur chacune une zone de niveau bas 32, par exemple en forme de cuvette, débouchant vers un orifice d'évacuation d'eau 34 et une zone de niveau haut 31, plus élevé que la zone de niveau bas 32, au voisinage de la zone de raccordement d'une pièce de guidage latérale 5. les gouttelettes d'eau provenant des pièces de guidage latérales 5 sont canalisées par gravité vers les zones de niveau bas pour être évacuées.

Dans le prolongement de l'invention, la traverse avant 1 présente dans son volume intérieur et sensiblement au voisinage de son axe transversal une zone de niveau haut 31 plus élevée que lesdites zones de niveau bas 32 pour former une pente sensiblement régulière depuis sa partie centrale en direction des zones latérales d'extrémité 30 et plus particulièrement des zones de niveau bas 32. On est assuré ainsi que l'eau récupérée dans l'ensemble du volume intérieur de la traverse avant 1 sera convenablement canalisée et évacuée par les orifices d'évacuation d'eau 34.

De façon préférentielle cette dernière zone de niveau haut 31 est le résultat du renfoncement de la surface inférieure de la traverse avant 1 au voisinage de son axe transversal, le renfoncement étant conformé pour loger et fixer des appareils électriques de commande tels qu'un moteur ou une manivelle d'entraînement de câble 9. Le moteur d'entraînement de câbles 9 du toit coulissant est maintenu à la paroi extérieure de la traverse avant 1 par des vis auto-taraudeuses ou analogues venant se fixer dans la paroi du renfoncement. L'avantage évident de cette solution réside dans le fait que les appareils électriques de commande sont isolés de l'humidité ou de l'eau récupérée dans le volume intérieur de la traverse avant 1. Les brins de gaine 8 libres dans lesquels coulissent les câbles 7 sont tirés le long de la paroi extérieure de la traverse avant 1 pour venir se croiser dans un manchon 10 de maintien de gaine. On prévoit dans chaque zone latérale d'extrémité 30 de la traverse avant 1 des passages de gaine 33, telles que des gorges venues de forme et conformées pour donner une courbure aux gaines en sortie de la traverse avant 1 et pour les maintenir immobiles pendant le coulissement des câbles dans celles-ci. Le manchon 10 de maintien de gaine 8 est adapté pour venir se fixer sur l'élément électrique de commande 9 lequel comporte une roue dentée venant en prise avec les câbles 7. A cet effet, les gaines 8 sont ajourées sur une partie de leur longueur dans le manchon 10, la roue dentée entraînée par le moteur de commande du toit venant se loger à l'intérieur du manchon 10 pour venir en prise avec les câbles 7.

Le volume intérieur de la traverse avant 1 en forme de cuvette libéré des moyens de guidage des câbles peut avantageusement recevoir des accessoires de toit ouvrant tel qu'un déflecteur de vent 4.

En se reportant maintenant à la figure 2, le profilé de chaque pièce de guidage 5, essentiellement en forme de U possède entre les deux branches du U 17, 18 une nervure 16 délimitant d'une part lesdits canaux de guidage 13, 14 et d'autre part un canal d'évacuation de l'eau 15. A la branche du U délimitant le canal de guidage des chariots 13 se raccorde un flasque 12 faisant saillie vers l'intérieur et qui s'oppose dans le même plan à un bord tombé de la nervure 16 pour maintenir en coulissement le chariot 6 même sous l'action de forces notables perpendiculaires à l'âme de la pièce de guidage latérale. Une nervure 11 placée sensiblement sous le bord tombé de la nervure 16 limite le canal de guidage de câble 14 pour sensiblement le fermer et guider rigidement en compression le câble 7 de manoeuvre du chariot 6. La branche 18 du U limitant le canal d'évacuation de l'eau 15 possède un flasque longitudinal 20 faisant saillie vers l'extérieur du cadre. Les flasques longitudinaux 20 des pièces de guidage latérales 5 prolongent un flasque longitudinal 21 de la traverse avant 1 faisant saillie vers l'extérieur du cadre afin d'assurer éventuellement la fixation du cadre sur la partie fixe 80 du pavillon du véhicule par des vis 10. Les flasques longitudinaux 21 de la traverse avant 1 et les pièces de guidage latérales 5 sont incurvés dans leur direction longitudinale pour épouser la forme bombée du pavillon du véhicule dans la zone d'ouverture du pavillon.

Les pièces de guidage latérales 5 possèdent un flasque longitudinal 22 faisant saillie vers l'intérieur du cadre sensiblement en prolongement de l'âme de chaque pièce de guidage latérale 5 pour recevoir une pièce de finition 27 fixée par clipage ou analogue. On notera que la traverse avant 1 et la traverse centrale 2 présente elle-même des flasques longitudinaux 23, 24 faisant saillie vers l'intérieur du cadre pour recevoir cette garniture 27. La branche 17 du U présente par ailleurs deux flasques 26 faisant saillie vers l'intérieur du cadre et disposés au-dessus du flasque 22, entre lesquels on déploie un pare-soleil ou analogue sur une partie de longueur des pièces de guidage latérales.

Les pièces de guidage latérales 5 viennent reposer par leur surface inférieure sur la surface supérieure des extrémités de la traverse centrale 2 faisant pontage. La traverse centrale 2 présente à ses extrémités des nervures complémentaires aux branches 18 des pièces de guidage latérales, prolongées par des flasques d'extrémité 25 complémentaires des flasques longitudinaux 20 des pièces de guidage latérales. Des pattes de fixation 50 maintenues rigidement sur la surface supérieure de la traverse centrale 2 par vis ou analogues viennent en appui sur la surface supérieure des flasques longitudinaux 22 des pièces de guidage latérales tandis que les flasques d'extrémité 25 de la traverse centrale 2 sont reliés rigidement aux flasques longitudinaux 20 des pièces de guidage latérales en des points de fixation éloignés par vis ou analogues 10. on assure ainsi une fixation suffisamment rigide des pièces de guidage latérales sur la traverse centrale pour éviter les risques de torsion des pièces de guidage latérales. On pourra encore améliorer cette rigidification en prévoyant un profilé nervuré de la traverse centrale. les flasques d'extrémité 25 de la traverse centrale 2 sont par ailleurs prolongés par une patte de fixation 52 pour la fixation de la traverse centrale sur la partie fixe du pavillon du véhicule.

Une traverse arrière 3 venue de moulage d'une matière plastique ou emboutissage d'une tôle est raccordée par ses zones latérales d'extrémité 60 aux extrémités arrières des pièces de guidage latérales 5. Comme pour la traverse avant 1, les zones latérales d'extrémité 60 de la traverse arrière 3 présentent un profil complémentaire du profil des pièces de guidage latérales 5, celles-ci venant s'insérées de manière analogue dans la traverse arrière 3. La traverse arrière possède une paroi arrière verticale 64, présentant éventuellement des nervures de rigidification. La paroi arrière verticale 64 présente des ouvertures 61 dans le prolongement des canaux de guidage des chariots 13 pour permettre leur démontage lorsque le cadre est fixé sur le véhicule. On pourra aussi prévoir comme pour la traverse avant 1 des orifices d'évacuation d'eau dans les zones latérales d'extrémité 60. Deux nervures 65 venues de forme dans les zones latérales d'extrémité 60 prolongent la nervure 16 de chaque pièce de guidage latérale 5 pour canaliser l'eau vers les orifices d'évacuation d'eau de la traverse arrière 3.

A la place de la traverse arrière 3, on peut substituer deux pièces de fermeture 67 venant se loger respectivement à l'extrémité arrière de chaque pièce latérale 5 dans le canal d'évacuation de l'eau 15. Ces pièces de fermeture 67 comportent dans leur volume intérieur un drain prolongé par un embout pour l'évacuation de l'eau vers l'extérieur du cadre. Ces mêmes pièces de fermeture pourront avantageusement être utilisées en complément de la traverse arrière 3 lorsque celle-ci est une tôle emboutie. Dans le cas où on ne prévoit pas le raccordement d'une traverse arrière telle que définie précédemment, les pièces latérales de guidage 5 reçoivent chacune à leur extrémité arrière, en plus d'une pièce de fermeture 67, une pièce de fixation 100 insérée dans le canal latéral 13 de guidage des chariots d'articulation comme représenté en figure 3. Chaque pièce de fixation 100 comporte un socle adapté pour être inséré dans un canal latéral de guidage et maintenu dans ledit canal par le flasque 12 et le bord tombé 16 du canal de guidage même sous l'action de forces notables perpendiculaires à l'âme de la pièce de guidage latérale. Le socle de la pièce de fixation 100 est prolongé sur sa face supérieure par un fût recevant une vis ou analogue pour la fixation de la pièce 100 sur la partie fixe 80 du pavillon comme représenté par la flèche sur la figure 3. On comprendra facilement que par translation de la pièce de fixation 100 dans le canal latéral 13 de guidage d'un chariot d'articulation, on pourra régler le point de fixation arrière d'une pièce de guidage latérale 5 sur la partie fixe du pavillon. De plus, cette fixation à l'arrière des pièces de guidage latérales 5 permet d'annuler tout effort de torsion du cadre.

## Revendications

1. Cadre modulaire pour toits coulissants et/ou entrebâillants guidés par câbles, notamment pour toits coulissants et/ou entrebâillants de véhicule, constitué de deux pièces de guidage latérales (5) alignées parallèlement l'une à l'autre pour guider en coulissement dans des canaux latéraux de guidage (13) des chariots d'articulation (6) du toit manoeuvrés par câbles, un premier élément transversal avant (1) présentant des zones latérales d'extrémité (30) se raccordant auxdites pièces de guidage latérales (5), un second élément transversal (2) faisant pontage entre les pièces de guidage latérales sensiblement dans leur partie centrale et des moyens de guidage des câbles pour leur guidage rigide en compression, caractérisé en ce que ledit premier élément transversal avant (1) est conformé pour définir un volume intérieur ouvert en forme de gouttière, les zones latérales d'extrémité (30) présentant en section une forme intérieure sensiblement identique et complémentaire de la forme extérieure d'une pièce de guidage latérale (5), lesdites zones latérales d'extrémité (30) se raccordant auxdites pièces de guidage latérales (5) par insertion des extrémités avant des pièces de guidage latérales à l'intérieur des zones latérales d'extrémité et en ce que lesdits moyens de guidage de câbles sont constitués de seconds canaux latéraux de guidage (14) juxtaposés aux premiers canaux de guidage (13) des chariots dans lesdites pièces de guidage latérales (5) et de gaines de guidage (8) dans lesquelles coulissent les câbles (7), chaque gaine de guidage (8) étant maintenue dans le volume intérieur du premier élément transversal avant en prolongement axial d'un second canal de guidage (14) de câble correspondant par des moyens de fixation de gaine (43, 46).

2. Cadre selon la revendication 1, caractérisé en ce que ledit premier élément transversal avant (1) est obtenu par moulage d'une matière synthétique thermoplastique ou thermodurcissable.

3. Cadre selon la revendication 1, caractérisé en ce que ledit premier élément transversal avant (1) est obtenu à partir d'une tôle emboutie.

4. Cadre selon les revendications 1 à 3, caractérisé en ce que lesdites gaines (8) de guidage des câbles (7) comportent un orifice évasé (40) à leur extrémité prolongeant un canal de guidage (14) d'un câble.

5. Cadre selon les revendications 1 à 4, caractérisé en ce que ledit premier élément transversal avant (1) comporte en disposition symétrique par rapport à son axe transversal deux orifices d'évacuation d'eau (34) vers l'extérieur de son volume intérieur dans les zones latérales d'extrémité (30), lesdites zones latérales d'extrémité présentant dans leur volume intérieur des zones de niveau bas (32) au voisinage d'un orifice d'évacuation d'eau et des zones de niveau haut (31) au voisinage de la zone de raccordement avec une pièce de guidage latérale (5).

6. Cadre selon la revendication 5 caractérisé en ce que ledit premier élément transversal avant (1) présente en outre dans son volume intérieur une zone de niveau haut (31) au voisinage de son axe transversal pour former une pente sensiblement régulière en direction desdites zones de niveau bas (32) dans les zones latérales d'extrémité (30).

7. Cadre selon la revendication 6, caractérisé en ce que ledit premier élément transversal avant (1) comporte un renfoncement (35) de sa surface inférieure au voisinage de son axe transversal, ledit renfoncement étant conformé pour loger et fixer des moyens de commande (9) des câbles.

8. Cadre selon les revendications 1 à 7, caractérisé en ce que le premier élément transversal avant (1) comporte deux gorges (33) dans les zones latérales d'extrémité (30) pour le passage desdites gaines (8) de guidage de câbles.

9. Cadre selon les revendications 1 à 8, caractérisé en ce que chaque moyen de fixation de gaine comprend un pavé (43) venu de forme dans le volume intérieur du premier élément transversal avant (1) et présentant sur sa surface supérieure un évidemment longitudinal (46) comportant une gorge (45) transversale audit évidement (44), en ce que chaque gaine comporte à son extrémité un bourrelet (44) sur sa circonférence venant se loger dans ladite gorge (45) dans l'évidement (44), et une pièce d'étanchéité (46) fixée audit pavé (43) par clipage ou analogue venant couvrir l'extrémité de la gaine dans l'évidement.

10. Cadre selon les revendications 1 à 9, caractérisé en ce que le volume intérieur du premier élément transversal avant (1) est prévu pour loger complètement un déflecteur avant (4).

11. Cadre selon les revendications 1 à 10, caractérisé en ce que lesdites pièces de guidage latérales (5) présentent une section transversale essentiellement en forme de U prolongée par un premier flasque longitudinal (20) faisant saillie vers l'extérieur du cadre et en ce que ledit premier élément transversal avant (1) comporte un flasque longitudinal (21) faisant saillie vers l'extérieur du cadre et prolongeant sensiblement lesdits flasques longitudinaux (20) desdites pièces de guidage latérales (5).

12. Cadre selon la revendication 11, caractérisé en ce que lesdits flasques longitudinaux (21) faisant saillie vers l'extérieur du cadre dudit premier élément transversal (1) et les pièces de guidage latérales (5) sont incurvés dans leur direction longitudinale respective.

13. Cadre selon les revendications 1 à 12, caractérisé en ce que lesdites pièces de guidage latérales (5) comportent des seconds flasques longitudinaux (22) faisant saillie vers l'intérieur du cadre, en ce que ledit premier élément transversal avant (1) présente un second flasque longitudinal (23) faisant saillie vers l'intérieur du cadre et en ce que le second élément transversal (2) comporte un flasque longitudinal (24) faisant saillie vers l'intérieur du cadre.

14. Cadre selon la revendication 13, caractérisé en ce que lesdites pièces de guidage latérales (5) sont fixées sur les extrémités du second élément transversal (2) par des pattes de fixation (50) maintenues rigidement sur la surface supérieure du second élément transversal et venant en appui sur la surface supérieure des flasques longitudinaux (22) faisant saillie vers l'intérieur du cadre des pièces de guidage latérales (5) et par des points de fixation reliant les flasques longitudinaux (20) faisant saillie vers l'extérieur du cadre des pièces de guidage latérales (5) et des flasques d'extrémité (25) correspondantes du second élément transversal (2).

15. Cadre selon la revendication 14 caractérisé en ce que les flasques d'extrémités (25) du second élément transversal (2) sont prolongées par une patte de fixation (52) sur le véhicule.

16. Cadre selon les revendications 1 à 15, caractérisé en ce qu'il comporte en outre un troisième élément transversal arrière (3) présentant deux zones latérales d'extrémité (60) se raccordant auxdites pièces de guidage latérales (5), ledit troisième élément transversal arrière (3) comportant une paroi verticale (64) dans laquelle, sont aménagées des ouvertures (61) en prolongement desdits premiers canaux de guidage des chariots desdites pièces de guidage latérales (5).

17. Cadre selon les revendications 1 à 15, caractérisé en ce qu'il comporte en outre une pièce de fermeture (67) venant se loger dans l'extrémité libre des moyens de guidage latéraux (5) pour la canalisation et l'évacuation d'eau.

## Patentansprüche

1. Rahmen in Modulbauweise für seilgesteuerte Schiebe- und/oder Hebedächer, insbesondere Schiebe- und/oder Hebedächer für Fahrzeuge, bestehend aus zwei seitlichen, parallel zueinander angeordneten Führungsteilen (5), um die Gleitbewegung von seilgesteuerten Dachgelenkwagen (6) in seitlichen Führungsrinnen (13) zu lenken, aus einem ersten vorderen Querelement (1), das seitliche Randteile (30) hat, die mit den besagten seitlichen Führungsteilen (5) verbunden werden, aus einem zweiten Querelement (2), das die seitlichen Führungsteile etwa in der Mitte brückenartig verbindet sowie aus Seilführungsmitteln für die starre Kompressionsführung der Seile,
dadurch gekennzeichnet, daß
das erste vordere Querelement (1) derart gestaltet ist, daß es elnen regenrinnenförmigen Innenraum aufweist, wobei die innere Form des Querschnitts der seitlichen Endteile (30) in etwa identisch und komplementär zur außeren Form eines seitlichen Führungsteils (5) ist, und wobei die besagten seitlichen Endteile (30) mit den besagten seitlichen Führungsteilen (5) durch Einstecken der vorderen Enden der seitlichen Führungsteile in die seitlichen Endteile verbunden werden, und dadurch gekennzeichnet, das die besagten Seilführungsmittel aus zweiten seitlichen Führungsrinnen (14) bestehen, welche neben den ersten seitlichen Wagenführungsrinnen (13) innerhalb der besagten seitlichen Führungsteile (5) liegen sowie aus Führungshüllen (8), durch welche die Seile (7) gleiten, wobei jede Führungshüllen (8) in den Innenraum des ersten vorderen Querelements in der Achsenverlängerung einer zweiten entsprechenden Seilführungsrinne (14) durch Steckhülsen (43, 46) gehalten wird.

2. Rahmen nach Anspruch 1,
dadurch gekennzeichnet, daß das erste vordere Querelement (1) durch Formgießen eines synthetischen, thermoplastischen oder durch Hitzeeinwirkung härtenden Material hergestellt wird.

3. Rahmen nach Anspruch 1,
dadurch gekennzeichnet, daß das erste vordere Querelement (1) aus gestanztem Blech hergestellt wird.

4. Rahmen nach einem der Ansprüche 1 bis 3,
dadurch gekennzeichnet, daß die besagten Hüllen (8) für die Führung der Seile (7) eine konisch erweiterte Öffnung (40) an dem Ende aufweisen, das eine Seilführungsrinne (14) eines Seiles verlängert.

5. Rahmen nach einem der Ansprüche 1 bis 4,
dadurch gekennzeichnet, daß das besagte erste vordere Querelement (1) zwei Wasserablauföffnungen (34) in den seitlichen Endstücken (30) aufweist, die symmetrisch zu seiner Querachse angeordnet sind, um das Wasser aus dem Innenraum abzuleiten, wobei die besagten seitlichen Endstücke in ihrem Innenraum niedrig liegende Bereiche (32) in der Nähe einer Wasserablauföffnung aufweisen sowie höher liegende Bereiche (31) in der Nähe des Anschlußgebiets zu einem seitlichen Führungsteil (5).

6. Rahmen nach Anspruch 5,
dadurch gekennzeichnet, daß der Innenraum des besagten ersten vorderen Querelements (1) außerdem einen höher gelegenen Bereich (31) in der Nähe seiner Querachse aufweist, der ein etwa gleichmäßiges Gefälle in Richtung der besagten tiefer gelegenen Bereiche (32) in den seitlichen Endstücken (30) bildet.

7. Rahmen nach Anspruch 6,
dadurch gekennzeichnet, daß das besagte erste vordere Querelement (1) eine Ausbuchtung (35) der unteren Fläche in der Nähe der Querachse aufweist, wobei besagte Ausbuchtung derart gestaltet ist, daß in ihr Seilsteuerungsmittel (9) untergebracht und befestigt werden können.

8. Rahmen nach einem der Ansprüche 1 bis 7,
dadurch gekennzeichnet, daß das erste vordere Querelement (1) zwei Rillen (33) in den seitlichen Endstücken (30) für den Durchgang der besagten Seilsteuerungshüllen (8) aufweist.

9. Rahmen nach einem der Ansprüche 1 bis 8,
dadurch gekennzeichnet, daß jedes Hüllenbefestigungsmittel in dem Innenraum des ersten vorderen Querelements (1) ein bei der Formgebung entstandenes klotzförmiges Teil (43) aufweist, welches auf der oberen Fläche eine längsgerichtete Aussparung (44) hat, mit einer zur besagten Aussparung querliegenden Rille (45) und dadurch gekennzeichnet, daß jede Hülle am Ende einen umgebenden Wulst (44) aufweist, welcher in die besagte Rille (45) in der Aussparung (44) eingelegt wird sowie ein Abdichtungsteil (46), das an dem besagten klotzförmigen Teil (43) durch Klammern oder ähnliche Mittel befestigt wird und welches das Ende der Hülle in der Aussparung bedeckt.

10. Rahmen nach einem der Ansprüche 1 bis 9,
dadurch gekennzeichnet, daß der Innenraum des ersten vorderen Querelements (I) derart gestaltet ist, daß er einen vorderen Windabweiser (4) vollständig aufnehmen kann.

11. Rahmen nach einem der Ansprüche 1 bis 10,
dadurch gekennzeichnet, daß die besagten seitlichen Führungsteile (5) grundsätzlich einen U-förmigen Querschnitt aufweisen, der durch eine aus dem Rahmen herausragende Längslasche (20) verlängert wird und dadurch gekennzeichnet, daß das besagte erste vordere Querelement (1) eine aus dem Rahmen herausragende Längslasche (21) aufweist, die in etwa die besagten Längslaschen (20) der besagten seitlichen Führungsteile (5) verlängert.

12. Rahmen nach Anspruch 11,
dadurch gekennzeichnet, daß die besagten, aus dem Rahmen herausragende Längslaschen (21) des besagten ersten vorderen Querelements (1) und die seitlichen Führungsteile (5) jeweils in Längsrichtung gekrümmt sind.

13. Rahmen nach einem der Ansprüche 1 bis 12,
dadurch gekennzeichnet, daß die besagten seitlichen Führungsteile (5) zweite, in den Rahmen hineinragende Längslaschen (22) aufweisen, daß das besagte erste vordere Querelement (1) eine zweite, in den Rahmen hineinragende Längslasche (23) aufweist und daß das zweite Querelement (2) eine in den Rahmen hineinragende Längslasche (24) aufweist.

14. Rahmen nach Anspruch 13,
dadurch gekennzeichnet, daß die besagten seitlichen Führungsteile (5) an den Enden des zweiten Querelements (2) durch Befestigungslaschen (50) befestigt sind, die selbst starr auf der oberen Fläche des zweiten Querelements befestigt sind und sich auf die obere Fläche der in den Rahmen hineinragenden Längslaschen (22) der seitlichen Führungsteile (5) abstützen, sowie durch Befestigungspunkte, die die aus dem Rahmen hinausragenden Längslaschen (20) der seitlichen Führungsteile (25) mit den entsprechenden Endlaschen (25) des zweiten Querelements (2) verbinden.

15. Rahmen nach Anspruch 14,
dadurch gekennzeichnet, daß die Endlaschen (25) des zweiten Querelements (2) durch eine am Fahrzeug befindliche Befestigungslasche (52) verlängert werden.

16. Rahmen nach einem der Ansprüche 1 bis 5,
dadurch gekennzeichnet, daß er darüber hinaus noch über ein drittes hinteres Querelement (3) verfügt, welches zwei seitliche Endteile (60) aufweist, die mit den besagten seitlichen Führungsteilen (5) verbunden werden, wobei besagtes drittes hinteres Querelement (3) eine senkrechte Wand (64) besitzt, in der Öffnungen (61) angebracht sind, die in der Verlängerung der besagten ersten Wagenführungsrinnen der besagten seitlichen Führungsteile (5) liegen.

17. Rahmen nach einem der Ansprüche 1 bis 15,
dadurch gekennzeichnet, daß er darüber hinaus über ein Verschlußteil (67) verfügt, welches in das freie Ende der seitlichen Führungsteile (5) gesteckt wird und das dem Lenken und Ableiten des Wassers dient.

## Claims

1. Modular frame for sliding and/or tilting roofs guided by cables, in particular for sliding and/or tilting roofs on vehicles, formed by two lateral guide pieces (5) aligned parallel to each other so as to guide, sliding in two lateral guide channels (13), runners (6) for articulation of the roof operated by cables, a first front transverse member (1) having end lateral areas (30) connecting to the said lateral guide pieces (5), a second transverse member (2) forming a bridge between the lateral guide pieces substantially in their middle part and means of guiding the cables for guiding them rigidly in compression, characterised in that said first front transverse member (1) is shaped so as to define an open internal volume in the form of a gutter, the end lateral areas (30) having in cross section an internal shape approximately identical and complementary to the external shape of a lateral guide piece (5), the said end lateral areas (30) connecting to the said lateral guide pieces (5) by insertion of the front ends of the lateral guide pieces inside the end lateral areas and in that the said cable guiding means are formed by second lateral guide channels (14) juxtaposed with the first channels (13) for guiding the runners in the said lateral guide pieces (5) and guide sheaths (8) in which the cables (7) slide, each guide sheath (8) being held in the internal volume of the first front transverse member axially in line with a second corresponding cable guide channel (14) by means for fixing (43, 46) a sheath.

2. Frame according to claim 1, characterised in that the said first front transverse member (1) is obtained by moulding a thermoplastic or thermosetting synthetic material.

3. Frame according to claim 1, characterised in that the said first front transverse member (1) is obtained from a pressed plate.

4. Frame according to claims 1 to 3, characterised in that the said sheaths (8) for guiding the cables (7) have a splayed orifice (40) at their ends extending a cable guide channel (14).

5. Frame according to claims 1 to 4, characterised in that the said first front transverse member (1) has, arranged symmetrically with respect to its transverse axis, two orifices (34) for draining water to the outside of its internal volume in the end lateral areas (30), the said end lateral areas having, in their internal volume, low level areas (32) in the vicinity of a water drainage orifice and high level areas (31) in the vicinity of the area for connecting to a lateral guide piece (5).

6. Frame according to claim 5, characterised in that the said first front transverse member (1) has in addition in its internal volume a high level area (31) in the vicinity of its transverse axis so as to form a substantially even slope in the direction of the said low level areas (32) in the end lateral areas (30).

7. Frame according to claim 6, characterised in that the said first front transverse member (1) has a recess (35) in its bottom surface in the vicinity of its transverse axis, the said recess being shaped to house and secure means (9) for controlling the cables.

8. Frame according to claims 1 to 7, characterised in that the first front transverse member (1) has two grooves (33) in the end lateral areas (30) for the said cable guide sheaths (8) to pass through.

9. Frame according to claims 1 to 8, characterised in that each sheath fixing means comprises a block (43) moulded in the internal volume of the first front transverse member (1) and having on its top surface a longitudinal recess (46) incorporating a groove (45) transverse to the said recess (44), in that each sheath has at its end a band (44) on its circumference which lodges in the said groove (45) in the recess (44), and a sealing piece (46) fixed to the said block (43) by snapping on or similar which covers the end of the sheath in the recess.

10. Frame according to claims 1 to 9, characterised in that internal volume of the first front transverse member (1) is designed so as to house completely a front deflector (4).

11. Frame according to claims 1 to 10, characterised in that the said lateral guide pieces (5) have a cross section essentially in a U shape extended by a first longitudinal flange (20) projecting towards the outside of the frame and in that the said first front transverse member (1) has a longitudinal flange (21) projecting towards the outside of the frame and more or less extending the said longitudinal flanges (20) on the said lateral guide pieces (5).

12. Frame according to claim 11, characterised in that the said longitudinal flanges (21) projecting towards the outside of the frame of the said first transverse member (1) and the lateral guide pieces (5) are curved in their respective longitudinal directions.

13. Frame according to claims 1 to 12, characterised in that the said lateral guide pieces (5) have second longitudinal flanges (22) projecting towards the inside of the frame, in that the said first front transverse member (1) has a second longitudinal flange (23) projecting towards the inside of the frame and in that the second transverse member (2) has a longitudinal flange (24) projecting towards the inside of the frame.

14. Frame according to claim 13, characterised in that the said lateral guide pieces (5) are fixed to the ends of the second transverse element (2) by fixing lugs (50) held rigidly on the top surface of the second transverse member and coming to bear on the top surface of the longitudinal flanges (22) projecting towards the inside of the frame of the lateral guide pieces (5) and by fixing points connecting the longitudinal flanges (20) projecting towards the outside of the frame of the lateral guide pieces (5) and the corresponding end flanges (25) of the second transverse member (2).

15. Frame according to claim 14, characterised in that the end flanges (25) of the second transverse member (2) are extended by a lug (52) for fixing to the vehicle.

16. Frame according to claims 1 to 16, characterised in that it includes in addition a third rear transverse member (3) having two end lateral areas (60) which connect to the said lateral guide pieces (5), the said third rear transverse member (3) having a vertical wall (64) in which openings (61) are provided in line with the said first channels for guiding the runners of the said lateral guide pieces (5).

17. Frame according to claims 1 to 15, characterised in that it includes in addition a closing piece (67) fitting in the free end of the lateral guide means (5) for the ducting and water drainage.
